(19) Europäisches Patentamt
European Patent Office
Office européen des brevets

(11) **EP 3 664 456 A1**

(12) **EUROPEAN PATENT APPLICATION**

(43) Date of publication:
**10.06.2020 Bulletin 2020/24**

(51) Int Cl.:
**H04N 21/2343** (2011.01)  **H04N 21/845** (2011.01)
**H04N 21/44** (2011.01)  **H04N 21/442** (2011.01)
**H04N 21/4402** (2011.01)

(21) Application number: **18382887.0**

(22) Date of filing: **03.12.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Solutions and Networks Oy
02610 Espoo (FI)**

(72) Inventors:
• **Pérez Garcia, Pablo
28050 MADRID (ES)**
• **Ruiz, Jaime Jesus
28050 MADRID (ES)**
• **Kachach, Redouane
28050 MADRID (ES)**
• **Frontelo, Ignacio Benito
28050 MADRID (ES)**

(74) Representative: **IP HILLS NV
Hubert Frère-Orbanlaan 329
9000 Gent (BE)**

(54) **APPARATUS AND METHOD FOR PLAYING STREAMED MEDIA**

(57) Apparatus (100) comprising:
- a media player (103) to playback segments of a media stream with an adjustable target end-to-end delay D;
- a buffer (102) for temporarily storing the segments;
- a bandwidth monitor (104) for estimating network goodput G;
- a quality selector (105) for determining a selected segment quality based on the goodput G, a buffer fill level L of the buffer (102), and the available segment qualities;
- a loader (101) for loading and storing the segments with the selected segment quality in the buffer (102);
- a delay selector (106) for determining the target end-to-end delay D for being applied to the segments via a speed controller (107) for controlling the playback speed of the media player (103);
- the delay selector (106) configured for determining a variable maximum bitrate for provision to a rate limiter (108) controlling the quality selector (105) such that the selected segment quality is limited based on the variable maximum bitrate.

Fig. 1

**Description**

**Technical Field**

Various example embodiments relate to an apparatus for playing streamed media like for instance a streamed video in a manner adapted to the network conditions by exposing the video content in different coding bitrates and therefore different qualities.

**Background**

Streaming of media like for instance a movie, a song or a digital file, has become popular over the past decade. A media item that is streamed, is constantly received by and presented to an end-user while it is being delivered by a provider over a network, for example the Internet. The end-user uses a media player installed on a client device to start play the media file before the entire file has been transmitted from the provider to the client device. A distinction can be made between live streaming which refers to the streaming of media content in real-time, while the event happens, as opposed to Video on Demand, abbreviated VoD, which refers to the streaming of content that is completely available at the provider's server at the point in time the end-user decides to start streaming and playing the content item.

For live streaming, the end-to-end delay is known to be relevant. The end-to-end delay corresponds to the time between the moment where content of a live event is captured and the moment where that same content is displayed by the client device for consumption by the end-user. The main contributions to the end-to-end delay are the coding delay resulting from the encoding of content at the provider side and the decoding of content at the client side, and the network delay resulting from transport of the content over the network infrastructure in between the provider and client. The latter network delay typically comprises a network preparation component resulting from network ingestion of the content at the provider side, a network delivery component resulting from the actual transfer of content over the network, and a network buffering component resulting from buffering of the content at the client side. If content is played by the client at the same rate as it is produced by the provider, which is usually the situation for live media streaming, the end-to-end delay remains constant throughout the entire live streaming session once it is established. Using current state-of-the-art technology, the coding delay is typically in the range of 1 to 4 seconds, whereas the network delay depends strongly on the used distribution technology. For traditional television distribution technology, like for instance cable TV, satellite TV or IPTV, the network delay is typically in the range of 0,5 to 2 seconds. For Over-The-Top services, abbreviated OTT services, wherein audio, video and/or other media are delivered over the Internet, the network delay is typically in the range of tens of seconds. The variance in delay between different providers and implementations of OTT services is typically also higher than for TV services.

Although the relevance of end-to-end delay in live media streaming, in particular for live streaming of sports events, has been acknowledged, little effort was spent on the formal characterization of the effect of end-to-end delay on the Quality of Experience, abbreviated QoE. Quality of Experience is the degree of delight or annoyance of an application or service as perceived by the end-user. QoE results from the fulfilment of the end-user's expectations with respect to the utility and/or enjoyment of an application or service in view of the user's personality and state.

An attempt to measure the effect on QoE of end-to-end delay in a football watching experience with participants watching in different rooms and cheering over an audio connection to simulate the effect of neighbours cheering a goal before you watch it, has demonstrated that a delay of 500 milliseconds has no effect on QoE, a delay of 1 second is noticeable, and a delay of 4 seconds or higher is annoying.

An increasingly important factor in the effect of end-to-end delay on QoE for live streaming services is the role of social networks as feedback channel. A relevant event in a live media stream will generate messages in social networks that may possibly reach a person watching the event with delay. For users connected to social networks, receiving information about an event before they watch it in the live media stream may impair their viewing QoE in a similar way as neighbours cheering before the event is watched. Studies of delay in social networks with respect to real life have demonstrated that first messages arrive in around 20 to 30 seconds with a message detection peak around 1 minute. The QoE of OTT live streaming which may experience tens of seconds of end-to-end delay consequently may be affected through social network messages.

Currently, most providers of live streaming services make use of the traditional TV channels: cable, satellite, linear IP channels. For such providers, OTT remains an additional service for secondary screens or on-demand content which does not require a low end-to-end delay. However, there is an increasing interest of OTT service providers to start providing premium sport content. Consequently, live streaming of OTT premium content is starting to coexist with live TV streaming, even for the same particular content and in the same country. As this tendency consolidates, the importance of managing end-to-end delay will increase as the same content may be received with significantly different end-to-end delays by different users in close locations.

State-of-the-art media players support adaptive bitrate technologies like HyperText Transfer Protocol (HTTP) Adaptive Bitrate (ABR) streaming to handle uncertainties and variations in the network conditions, i.e. variations in the throughput that the network offers for downloading media segments from the service provider infrastructure to the client. Adaptive bitrate technologies rely on exposing the same media content like for instance a single video segment in different coding bitrates and therefore different visual qualities. Video players that support ABR download a video segment in one or plural qualities that are selected depending on their availability, network conditions and playout buffer fill length. Typically, the buffer shall increase the end-to-end delay up to tens of seconds. This way, the video player can adapt the playout quality in case of an instantaneous drop in the network throughput while preventing the video playback from stalling. As soon as the network throughput increases, the video player will again attempt to download the video segments with a higher coding rate such that the playout quality can be increased again.

Adaptive bitrates, while suitable for on-demand content, present a drawback for live media streaming. The media segments downloaded and stored in the playout buffer must have been generated already by the video source. Consequently, a live scene would be presented with significant delay compared to the moment where the event actually occurred and - even worse - compared to the delay presented by alternate distribution technologies like for instance satellite TV, covering the same live event. Reducing the latency could be achieved by reducing the buffer fill length, but this might not be possible for all customers at all times without significantly impacting the QoE as a result of buffer underrun and stalling video.

In real-time communications, an additional restriction is that the end-to-end delay must remain constant for the duration of the streaming session. In live video streaming, the end-to-end delay is typically determined at the beginning of the streaming session and tends to be high in order to protect the video streaming against changing network conditions and future video stalling that may result therefrom.

Traditionally, delay has been considered as a constraint in the rate distortion optimization problem. For instance, when communication channels are used with high error rates such as for instance wireless communication channels, delay restrictions may be imposed to optimize the coding and transmission process such that the highest possible coding bitrate is offered with minimized number of rate switching as a result of the varying wireless network conditions.

Alternatively or complementary thereto, delay may be optimized by removing part of the overhead of the protocol stack or by dividing a media segment in smaller units that can be made available more frequently.

At the client device side, Adaptive Media Playout or AMP allows to dynamically modify the playback rate as a tool for buffer management that avoids underrun or overrun of the playout buffer.

## Summary

Although various examples are known wherein end-to-end delay is dynamically modified under different circumstances, none of the existing technologies consider the trade-off between latency (end-to-end delay) and distortion (coding quality, stalling, etc.) in a consistent manner.

Amongst others, it is therefore an object to disclose embodiments of an adaptive bitrate media player client apparatus that optimizes the usage of network resources such that overall quality that may be impaired by both delay and distortion is optimized.

This object is achieved, according to a first example aspect of the present disclosure, by an apparatus as set out in claim 1, comprising:

- a media player configured to playback segments of a media stream with an adjustable target end-to-end delay D;
- a buffer configured to temporarily store the segments before playback;
- a bandwidth monitor configured to estimate network goodput G corresponding to usage of network resources to transport the segments to the apparatus;
- a quality selector configured to determine a selected segment quality out of a plurality of available segment qualities corresponding to respective encoding rates for the segments, based on the goodput G, a buffer fill level L of the buffer, and information indicative for the available segment qualities;
- a loader configured to load the segments of the media stream with the selected segment quality and to store the segments in the buffer;
- a delay selector configured to determine the target end-to-end delay for being applied to the segments via a speed controller configured to control the playback speed of the media player;
- the delay selector further being configured to determine a variable maximum bitrate for provision to a rate limiter configured to control the quality selector such that the selected segment quality is further limited based on the variable maximum bitrate.

Thus, sample embodiments of the invention concern a modified adaptive bitrate media player apparatus that considers not only the impact on the end user's Quality of Experience resulting from lower coding bitrates of the media segments but that also considers QoE impact resulting from a higher end-to-end delay. Sample embodiments of the modified adaptive bitrate media player consequently invest network resources, quantified as application throughput and named goodput in the present patent application, either through increasing the coding bitrate of the media segments or through reducing the end-to-end delay of the streaming session. This way, when goodput is low, the media player shall operate with a bigger buffer and consequently with higher end-to-end delay D to invest any bits per second of the goodput in getting a higher media quality. On the other hand, when goodput is high, the media player shall reduce the buffer size and consequently also the end-to-end delay D at the cost of requesting coding bitrates that are lower than would theoretically be achievable with the given goodput. The transition between the different end-to-end delay values is implemented through a speed controller that adaptively controls the media playout speed of the media player in view of an adjustable target end-to-end delay determined by a delay selector.

Embodiments of the apparatus consequently implement a kind of bitrate-delay ladder. The bitrate ladder that is known from traditional ABR video players represents a discrete set of bitrates for video streams and/or audio streams, that typically look as follows:

$$R_{V,k} = C^k \times R_{V,0}$$

Herein:

k represents a positive integer index value indicative for the quality level (or step on the bitrate ladder);
C represents the quality increase factor between subsequent quality levels (or between subsequent coding bitrates on the bitrate ladder); and
$R_{V,k}$ represents the bitrate of the k'th quality level.

The perceptual quality increase or QoE increase between subsequent steps of the bitrate ladder is relatively uniform as the coding bitrate $R_{V,k}$ of the k'th quality level is C times the coding bitrate of the previous quality level k-1.

In embodiments of the apparatus however, when the goodput increases, instead of requesting the media quality to increase (i.e. the next step on the bitrate ladder), a transition is made to a next delay step (corresponding to a different bitrate ladder) such that the video player continues to operate with a lower coding quality as well as with a lower end-to-end delay. On the other hand, when the goodput decreases, a transition back to the previous end-to-end delay value is made. The delay step $\alpha$ shall typically be selected to correspond to the inverse of the coding bitrate step, i.e. $\alpha = 1/C$. Embodiments of the media player consequently are able to step on a bitrate ladder and to switch from a bitrate ladder with a first end-to-end delay to a bitrate ladder with a higher or lower target end-to-end delay, hence implementing a bitrate-delay ladder. This way, the usage of network resources or goodput is dynamically adapted such that the overall Quality of Experience by the end-user is optimized. This overall QoE contains distortion contributions resulting from the coding bitrate as well as delay contributions resulting from the end-to-end delay.

The main advantage of embodiments of the apparatus relies in the optimized usage of network resources such that the overall QoE is optimal. Existing ABR media players do not consider the end-to-end delay and therefore operate with high delays regardless the quality of service of the network.

A further advantage lies in the fact that the trading of the available goodput between coding quality and end-to-end delay is complementary to other techniques reducing the end-to-end delay such as the use of smaller segments, removal of overhead, etc. The media player client device according to the invention can be implemented on top of existing delay reducing techniques to even further reduce the end-to-end delay, or alternatively to increase the end-to-end delay if the goodput becomes so low that it becomes worth considering better encoding qualities.

In sample embodiments of the apparatus, as set out in claim 2, the delay selector is further configured to determine a scale factor $\alpha$ for provision to the rate limiter such that the estimated network goodput G is scaled by the scale factor $\alpha$.

Indeed, upon a variation of the delay corresponding to a transition to a different bitrate ladder as described here above, the rate limiter may receive the scale factor $\alpha$ in addition to the newly calculated maximum bitrate $R_{MAX}$ from the delay selector. The rate limiter thereupon applies the factor $\alpha$ to the goodput G, and to any time-based threshold like for instance time thresholds $T_L$, $T_H$ that control respectively the minimum and maximum target fill levels of the video segment buffer, before forwarding these values to the quality selector. The rate limiter for instance also scales the cumulative distribution function F(t) of download times as $F(t/\alpha)$. The adapted goodput, time thresholds and cumulative distribution of download times are then passed through towards the quality selector such that the quality selector accounts for the new bitrate ladder when selecting the segment quality for future media segments. The rate limiter further ensures that video segments with coding bitrate Rv greater than $R_{MAX}$ are not downloaded as they would not produce any increase in QoE.

In sample embodiments of the apparatus, as set out in claim 3, the delay selector is further configured to adjust the maximum bitrate and/or to further adjust a minimum bitrate based on the target end-to-end delay D as determined by the delay selector.

Indeed, in case of a delay jump, a transition is made to a different bitrate ladder. This different bitrate ladder preferably has a different maximum bitrate and/or a different minimum bitrate that may trigger new delay jumps.

In sample embodiments of the apparatus, as set out in claim 4, the delay selector is further configured to adjust the maximum bitrate and/or to adjust the minimum bitrate based on a ratio of media Quality of Experience contribution and delay Quality of Experience contribution.

Indeed, if the media QoE is modelled as a function of the bitrate R and the delay QoE is modelled as a function of delay D, the maximum bitrate may be set equal to the maximum available coding rate for which the media QoE remains smaller than the delay QoE. The minimum bitrate may be set equal to the maximum available coding rate for which the media QoE remains smaller than the delay QoE calculated for the next step delay, corresponding to a target end-to-end delay that is a factor C higher.

In sample embodiments of the apparatus, as set out in claim 5, the delay selector is further configured to determine the target end-to-end delay D at most once within a predetermined time interval.

Thus, to limit the number of delay jumps, sample embodiments may not allow more than one delay jump within a predetermined time interval. The predetermined time interval shall typically range from a few seconds up to a few minutes, depending on the application or service.

In sample embodiments of the apparatus, as set out in claim 6, the delay selector is further configured to add hysteresis when determining the target end-to-end delay D.

Thus, the delay jumps may lag behind such that delay jumps and the cost thereof in terms of QoE for the end-user can be avoided in case of quick, instantaneous variations of the goodput that not last.

In sample embodiments of the apparatus, as defined by claim 7, the delay selector is further configured to determine the target end-to-end delay D at a rate based on a Quality of Experience parameter.

Hence, the QoE may explicitly be considered in the delay transition phase such that for instance lower variation rates are implemented when the QoE is already high so it is not impaired, and higher variation rates are implemented when the QoE is low and additional QoE impairment resulting from the variation itself will have less impact.

According to a second example aspect, as set out in claim 8, a method is disclosed, the method comprising:

- playing segments of a media stream with an adjustable target end-to-end delay D;
- temporarily storing the segments in a buffer before playback;
- estimating network goodput G corresponding to usage of network resources to transport the segments;
- determining a selected segment quality out of a plurality of available segment qualities corresponding to respective encoding rates for the segments, based on the goodput G, a buffer fill level L of the buffer, and information indicative for the available segment qualities;
- loading the segments of the media stream with the selected segment quality and storing the segments in the buffer;
- determining the target end-to-end delay D for being applied to the segments;
- controlling the playback speed by applying the target end-to-end delay D when playing the segments;
- determining a variable maximum bitrate; and
- limiting the selected segment quality based on the variable maximum bitrate.

Sample embodiments of the method, as set out in claim 9, further comprise:

- determining a scale factor $\alpha$ such that the estimated network goodput G is scaled by the scale factor $\alpha$.

Sample embodiments of the method, as set out in claim 10, further comprise:

- adjusting the maximum bitrate and/or adjusting a minimum bitrate based on the target end-to-end delay D.

Sample embodiments of the method, as set out in claim 11, further comprise:

- adjusting the maximum bitrate and/or to adjusting the minimum bitrate based on a ratio of media Quality of Experience contribution MOSV and delay Quality of Experience contribution MOSD.

Sample embodiments of the method, as set out in claim 12, further comprise:

- determining the target end-to-end delay D at most once within a predetermined time interval.

Sample embodiments of the method, as set out in claim 13, further comprise:

- adding hysteresis when determining the target end-to-end delay D.

Sample embodiments of the method, as set out in claim 14, further comprise:

- determining the target end-to-end delay D at a rate based on a Quality of Experience MOS parameter.

According to a third example aspect, as set out in claim 15, a computer program product is disclosed, comprising computer-executable instructions for causing an apparatus to perform at least the following:

- playing segments of a media stream with an adjustable target end-to-end delay D;
- temporarily storing the segments in a buffer before playback;
- estimating network goodput G corresponding to usage of network resources to transport the segments;
- determining a selected segment quality out of a plurality of available segment qualities corresponding to respective encoding rates for the segments, based on the goodput G, a buffer fill level L of the buffer, and information indicative for the available segment qualities;
- loading the segments of the media stream with the selected segment quality and storing the segments in the buffer;
- determining the target end-to-end delay D for being applied to the segments;
- controlling the playback speed by applying the target end-to-end delay D when playing the segments; and
- limiting the selected segment quality based on the variable maximum bitrate.

## Brief Description of the Drawings

Some example embodiments will now be described with reference to the accompanying drawings.

Fig. 1 shows an example embodiment of an adaptive bitrate media player client device 100;

Fig. 2 shows a bitrate ladder as implemented by conventional adaptive bitrate media player client devices;

Fig. 3 shows a bitrate-delay ladder as implemented by the adaptive bitrate media player client device 100 of Fig. 1;

Fig. 4 illustrates reference configurations of models determining an end-to-end delay QoE impact score for different media streaming services, as may be used in example embodiments of an adaptive bitrate media player client device; and

Fig. 5 shows an example embodiment of a suitable computing system 500 for performing one or several steps in embodiments of the invention.

## Detailed Description of Embodiment(s)

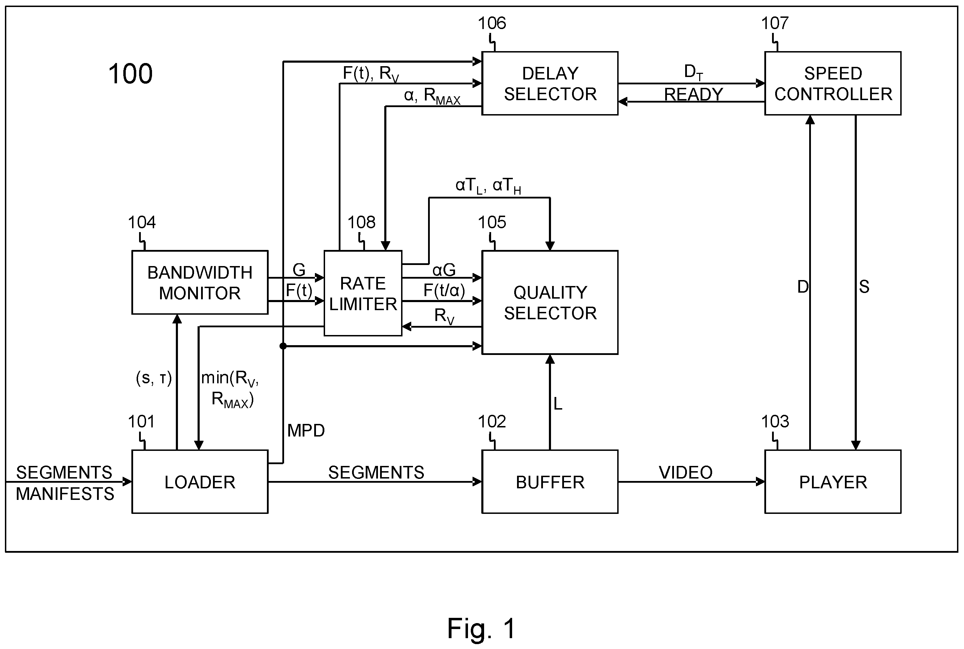

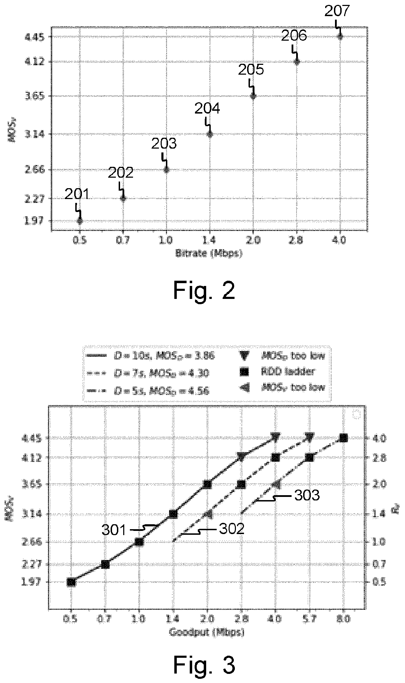

Fig. 1 is a functional block scheme of an embodiment of an adaptive bitrate video player client device 100 that comprises a video segment loader 101, a video segment buffer 102, a video player 103, a bandwidth monitor 104, a quality selector 105, a delay selector 106, a speed controller 107 and a rate limiter 108. Compared to a traditional adaptive bitrate video player client device, the device 1000 of Fig. 1 comprises some additional modules, more precisely the delay selector 106, the speed controller 107 and the rate limiter 108 that enable to implement a bitrate-delay ladder that will be described further below with reference to Fig. 3.

In the device 100 of Fig. 1, video segments and manifest files, which are files that describe the different qualities or coding bitrates wherein video segments are available also named Media Presentation Description files or MPD files, are downloaded by the loader module 101. Each time a new video segment is downloaded, its size s and its download time $\tau$ are registered with the bandwidth monitor module 104 as is indicated by the tuple $(s, \tau)$ in Fig. 1. The bandwidth monitor 104 uses this information to estimate the network goodput G, being the use of network resources in bits per second, and the histogram of download times, represented by its complementary cumulative distribution function F(t). The goodput G and the cumulative distribution function of download times F(t) are reported to the rate limiter 108. In a conventional ABR video player, G and F(t) would be used by the quality selector 105 together with the current fill level L of the video segment buffer 102 and information indicative for the available qualities extracted from the MPD files, to determine the quality or coding bitrate $R_V$ of video segments to be downloaded by the loader module 101. The quality selector 105 would then pick video segments whose coding bitrate $R_V$ is close to the network goodput G, but it would also monitor the buffer fill level L to possibly modify its decision on the basis of the probability of buffer underrun as well as on the basis of some configurable time thresholds $T_L$ and $T_H$ that control respectively the minimum and maximum target fill levels of the video segment buffer 102.

Compared to a conventional ABR video player, the video player client device 100 of Fig. 1 contains three additional modules: the delay selector 106, the speed controller 107 and the rate limiter 108.

The delay selector 106 is responsible for selecting the target end-to-end delay D at each point in time, and thereto implements a bitrate-delay ladder. The inputs of the delay selector 106 are the bitrate ladder as extracted from the manifest files MPD, the current selected bitrate Rv as selected by the quality selector 105, the complementary cumulative distribution of segment download times F(t), and a "ready" flag from the speed controller 107. The outputs of the delay selector 106 are the target delay D, a scale factor $\alpha$ to be applied to the goodput G by rate limiter 108 and a adjustable maximum allowed bitrate $R_{MAX}$ that is also communicated to the rate limiter 108.

The bitrate ladder extracted from the manifest files MPD is illustrated by Fig. 2 and represents a discrete set of bitrates 201, 202, 203, 204, 205, 206, 207 for video streams and/or audio streams, as follows:

$$R_{V,k} = C^k \times R_{V,0}$$

Herein:

- k represents a positive integer index value indicative for the quality level (or step on the bitrate ladder), e.g. k = 1 ... 7 in Fig. 2;
- C represents the quality increase factor between subsequent quality levels (or between subsequent coding bitrates on the bitrate ladder), e.g. C = 1.4 in Fig. 2; and
- $R_{V,k}$ represents the bitrate corresponding to the k'th quality level, expressed in bps (bits per second) or Mbps (megabits per second).

In the example embodiment illustrated by Fig. 2, the perceptual quality increase $MOS_V$ or video contribution to the end-user's Quality of Experience (QoE) between subsequent steps of the bitrate ladder is relatively uniform as the coding bitrate $R_{v,k}$ of the k'th quality level is C times the coding bitrate of the previous quality level k-1. Further, it is assumed that the ladder step C is extracted from the manifest file MPD. In alternative embodiments however, the size of the ladder step C can be linear instead of proportional, for instance C = D / (D-T) for each step with D being the delay. In its further noticed that in alternative implementations, the ladder step C can be established by configuration instead of being computed from the manifest file MPD.

The delay selector 106 is configured to use the bitrate ladder of Fig. 2 extracted from the manifest file MPD for implementation of a bitrate-delay ladder 301, 302, 303 as illustrated by Fig. 3. Herein, the leftmost curve 301 represents the normal bitrate ladder as extracted from the MPD file. The video client device 100 will operate in this ladder 301 when the goodput G is low, with a buffer 102 which is large enough to minimize the probability of buffer underrun to minimize the risk of video stalling. This allows the video client device 100 to operate with an optimized end-to-end delay D.

If the goodput G increases and reaches values above a configured maximum bitrate $R_{MAX}$ (arrows pointing downward in Fig. 3), instead of requesting the video bitrate quality to follow the goodput, i.e. Rv = G, the delay selector 106 transitions to the next delay step, i.e. the next curve 302 on the right. As a consequence, the video client device 100 shall requests lower qualities, i.e. Rv = $\alpha$.G with 0 < $\alpha$ < 1) and it will operate with a lower delay, i.e. D' = $\alpha$.D. $R_{MAX}$ may be adjusted and the same mechanism may be applied on the second bitrate ladder 302. The video client device 100 requests higher bitrates when the network goodput G allows to do so, until the network goodput G surpasses the maximum bitrate $R_{MAX}$. If this happens (indicated by the downward pointing arrow on curve 302), the delay selector 106 makes a transition to the next bitrate ladder 303 on the right by decreasing the delay with a factor $\alpha$. On the other hand, when the goodput G decreases below a minimum bitrate $R_{MIN}$ (indicated by the left pointing arrow on curve 303), the delay selector 106 transitions back to the previous delay value and consequently to the previous bitrate ladder 302. The video client device 100 now elects to use the remaining goodput to maintain or increase the video coding quality at the price of an increased delay and consequently of an increased buffer length. When operating on the second curve 302, the minimum bitrate $R_{MIN}$ and maximum bitrate $R_{MAX}$ are recalculated. The same mechanism is then applied: when the goodput G further drops below the re-calculated $R_{MIN}$ value, the delay selector 106 will further increase the delay as a result of which the transition is made to the first bitrate ladder 301. The delay step $\alpha$ in sample embodiments is selected to have the same size as the bitrate step: $\alpha$ = 1/C.

In the above described embodiment(s) of the video player client 100, the cost in Quality of Experience or QoE for the end-user of the speed variations resulting from the delay jumps is not considered. Some modifications could be implemented in alternative embodiments to include this cost, in particular when Mean Opinion Score or MOS values are available, for instance from the manifest file, a quality monitoring system or network planning tool operating according to certain standard specifications like for instance ITU-T P.1201, ITU-T P.1203, ITU-T G.1071, or from proprietary implemented QoE monitoring systems. In an alternative, simple to implement embodiment of the video player client that assumes that delay variations represent a cost in QoE, the number of delay jumps may be limited, for instance by not allowing more than one delay jump within a predetermined time interval of for instance X seconds or Y minutes. In further embodiments of the video player client, some hysteresis may be added to the delay jumps in order to avoid that every instantaneous crossing of the maximum bitrate or minimum bitrate results in a delay jump. In yet other embodiments of the video player client, available MOS values may be included in the delay transition algorithm as implemented by the delay selector. Lower variation rates may be implemented when the MOS is already high so the QoE is not unnecessarily impaired or higher variation rates may be allowed when the MOS is already low and an additional impairment will have less impact. In situations where the contribution of the video coding bitrates to the QoE, denoted as MOSV, and the contribution of the end-to-end delay to the QoE, denoted as MOSD, are available, the speed S of the delay variation may further be made dependent on the MOSD/MOSV ratio.

The determination of MOS, MOSV and/or MOSD values is not a subject of this invention. MOS values may for instance be included in the manifest file MPD as an extension metadata or may be obtained from qualityRanking parameters contained therein. Any existing method to estimate MOSV from the coding bitrate may be used. It is worth noting that a whole MOSV scale is not needed as it is sufficient to have MOSV values for the existing bitrates in the manifest file MPD. As an example, a standardized method may be used to compute MOSV from bitrate, such as the method specified in ITU-T G.1071. In alternative embodiments, MOSV may be computed through the following formula:

$$MOSV = 5 - 4 \times (A + B \times \exp(C * R_V))$$

Herein:

- Rv represents the video coding bitrate;
- A, B and C are configuration parameters that could be determined from subjective assessment tests; and
- exp represents the exponential operator, generally known as the mathematical power of e with e = 2.718281828...

Without loss of generality, the end-to-end delay QoE impact score MOSD may in embodiments of the video client device be a value in a 1-5 value scale that is obtained through the formula:

$$MOSD = F(D, parameters) = 5 - 4 \times C(D, parameters) \qquad (1)$$

with:

- F representing a function;
- D representing the end-to-end delay;
- parameters representing application dependent parameters defining the statistic probability that a given delay has an impact on the QoE, for instance the mean value $\mu$ and standard deviation $\sigma$; and
- C(D) for a given set of parameters representing a monotonically increasing cost function with C(0) = 0 and C(infinity) = 1.

In embodiments, C(D) represents the accumulated probability of receiving some information about an event in a live video stream from an external channel before the event is watched in the live video stream. In other words, C(D) then represents the chance that information on a real-life event like for instance the scoring of a goal in a football game propagates to the end-user through alternate channels, like for instance social network feeds, with a random delay before the relevant event is being viewed by the end-user. Gamma distributions are known to model the probabilistic distribution of delay very well. The parameters k and $\theta$ of such Gamma distribution can be selected to respectively model its shape (via shape parameter k) and scale (via scale parameter $\theta$), and these parameters can be used to select the mean value $\mu$ and standard deviation $\sigma$ of the distribution. Alternatively, the Gamma distribution function can be characterized directly by the mean value $\mu$ and standard deviation $\sigma$. The parameters $\mu$ and $\sigma$ respectively represent the application dependent mean value and standard deviation as set by the service provider or as selected for instance from a reference configuration table as follows:

| Service | $\mu$ (seconds) | $\sigma$ (seconds) |
|---------|-----------------|--------------------|
| TV | 2.5 | 2 |
| OTT, sports | 20 | 15 |

(continued)

| Service | μ (seconds) | σ (seconds) |
|---|---|---|
| OTT, premiere or series chapter | 60 | 30 |

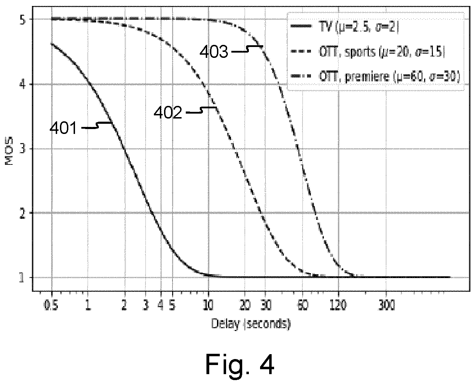

The corresponding MOSD values as a function of delay D for the three different types of services listed in the above table are depicted in Fig. 4 where 401 represents MOSD as a function of delay D for TV services, 402 represents MOSD as a function of delay D for OTT sports services, and 403 represents MOSD as a function of delay D for OTT premiere or series chapter services. In such embodiment implementing the parameter values from the above reference table, it is for instance assumed that OTT services have two distinct models: a first model with higher latency requirements for sports streaming and a second model with lower latency requirements wherein parallel information will come only from social networks like for instance the streaming of premieres or a series chapter.

In alternative embodiments, the probabilistic quality of experience cost model $C(D)$ corresponds to a bounded linear function. Such bounded linear function simplifies the implementation. The bounded linear function is defined as follows:

$$C(D) = 0 \text{ if } D <= A$$

$$C(D) = (D-A)/(B-A) \text{ if } A < D < B$$

$$C(D) = 1 \text{ if } D >= B$$

Herein, the parameters A and B are selected such that $A = \mu - \sigma/2$ and $B = \mu + \sigma/2$ with $\mu$ and $\sigma$ respectively representing the application dependent mean value and standard deviation as set by the service provider or as selected for instance from a reference configuration table as the one here above.

In further example embodiments, the probabilistic quality of experience cost model $C(D)$ corresponds to a shifted Gamma distribution function. Compared to a Gamma distribution function, the shifted Gamma distribution function introduces a third parameter, $D_0$, that enables to shift the distribution function.

Still in further example embodiments, the probabilistic quality of experience cost model $C(D)$ corresponds to a sigmoid function.

The speed controller 107 is in charge of modifying the playback speed of the video player 103 to effectively increase or decrease the end-to-end delay. It receives the target delay $D_T$ from the delay selector 106 and monitors the actual delay D. Depending on the difference between target delay $D_T$ and actual delay D, it modifies the speed S of the playback clock of the video player 103, for example by a factor $S_0$ as long as D is below $D_T$, by a factor $1/S_0$ as long as D is greater than $D_T$, and by a factor 1 when D is equal to $D_T$. Herein, $S_0$ represents a configurable value that can be set between 1.1 and 1.25. A "ready" flag is set to a true value as soon as D is equal to $D_T$. The "ready" flag is communicated to the delay selector 106 to signal that the target delay $D_T$ has been reached.

It is assumed that the video player 103 implements Adaptive Media Playout algorithms so that the playout speed can actually be selected by an external module like the speed controller 107. Existing video players which are known to implement AMP correctly for instance are Android MediaPlayer, Google ExoPlayer, MPlayer, YouTube web player.

Upon a variation of the delay, i.e. a transition to a different bitrate ladder as described here above with reference to Fig. 3, the rate limiter 108 receives the factor $\alpha$ and the newly calculated maximum bitrate $R_{MAX}$ from the delay selector 106. The rate limiter 108 thereupon applies the factor $\alpha$ to the goodput G, and to any time-based threshold $T_L$, $T_H$ before forwarding these values to the quality selector 105. The rate limiter further also scales the cumulative distribution function $F(t)$ of download times as $F(t/\alpha)$. The adapted goodput, time thresholds and cumulative distribution of download times are passed through towards the quality selector 105. The rate limiter 108 further ensures that video segments with coding bitrate Rv greater than $R_{MAX}$ are not downloaded as they would not produce any increase in MOS or QoE.

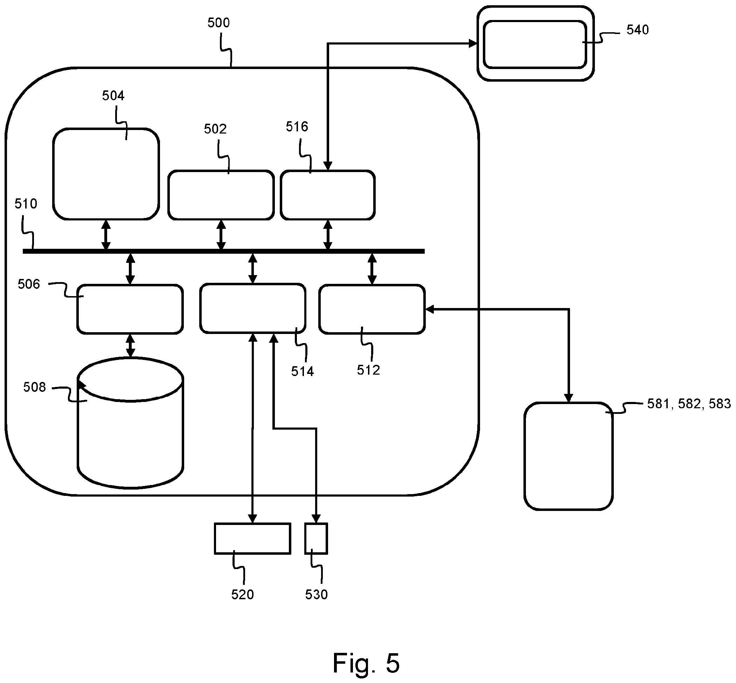

Fig. 5 shows a suitable computing system 500 enabling to implement embodiments of the video player client device or parts thereof. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, -ROM disk, solid state drives, flash memory cards, ... could be used. Computing system 500 could thus correspond to controller circuitry that implement the quality selector 105, delay selector 106, speed controller 107 and rate limiter 108 of the embodiment illustrated by Fig. 1.

It is further to be remarked that all or part of the described functions of the apparatus can be realized by means of downloadable software from a server to a processing device.

As used in this application, the term "circuitry" may refer to one or more or all of the following:

(a) hardware-only circuit implementations such as implementations in only analog and/or digital circuitry and

(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. Apparatus (100) comprising:

   - a media player (103) configured to playback segments of a media stream with an adjustable target end-to-end delay D;
   - a buffer (102) configured to temporarily store said segments before playback;
   - a bandwidth monitor (104) configured to estimate network goodput G corresponding to usage of network resources to transport said segments to said apparatus (100);
   - a quality selector (105) configured to determine a selected segment quality out of a plurality of available segment qualities corresponding to respective encoding rates for said segments, based on said goodput G, a buffer fill level L of said buffer (102), and information indicative for said available segment qualities;
   - a loader (101) configured to load said segments of said media stream with said selected segment quality and to store said segments in said buffer (102);
   - a delay selector (106) configured to determine said target end-to-end delay for being applied to said segments via a speed controller (107) configured to control the playback speed of said media player (103);
   - said delay selector (106) further being configured to determine a variable maximum bitrate for provision to a rate limiter (108) configured to control said quality selector (105) such that said selected segment quality is further limited based on said variable maximum bitrate.

2. Apparatus according to claim 1, wherein said delay selector (106) is further configured to determine a scale factor $\alpha$ for provision to said rate limiter (108) such that said estimated network goodput G is scaled by said scale factor $\alpha$.

3. Apparatus (100) according to claim 1 or claim 2, wherein said delay selector (106) is further configured to adjust said maximum bitrate and/or to further adjust a minimum bitrate based on said target end-to-end delay D as determined by said delay selector (106).

4. Apparatus (100) according to any of claims 1 to 3, wherein said delay selector (106) is further configured to adjust said maximum bitrate and/or to adjust said minimum bitrate based on a ratio of media Quality of Experience contribution MOSV and delay Quality of Experience contribution MOSD.

5. Apparatus (100) according to one of the preceding claims, wherein said delay selector (106) is further configured to determine said target end-to-end delay D at most once within a predetermined time interval.

6. Apparatus (100) according to one of the preceding claims, wherein said delay selector (106) is further configured to add hysteresis when determining said target end-to-end delay D.

7. Apparatus (100) according to one of the preceding claims, wherein said delay selector (106) is further configured to determine said target end-to-end delay D at a rate based on a Quality of Experience MOS parameter.

8. Method for adaptive bitrate media playback comprising:

   - playing segments of a media stream with an adjustable target end-to-end delay D;
   - temporarily storing said segments in a buffer (102) before playback;
   - estimating network goodput G corresponding to usage of network resources to transport said segments;
   - determining a selected segment quality out of a plurality of available segment qualities corresponding to respective encoding rates for said segments, based on said goodput G, a buffer fill level L of said buffer (102), and information indicative for said available segment qualities;
   - loading said segments of said media stream with said selected segment quality and storing said segments in said buffer (102);
   - determining said target end-to-end delay D for being applied to said segments;
   - controlling the playback speed by applying said target end-to-end delay D when playing said segments;
   - determining a variable maximum bitrate; and
   - limiting said selected segment quality based on said variable maximum bitrate.

9. Method according to claim 8 further comprising:

   - determining a scale factor $\alpha$ such that said estimated network goodput G is scaled by said scale factor $\alpha$.

**10.** Method according to claim 8 or claim 9, further comprising:

- adjusting said maximum bitrate and/or adjusting a minimum bitrate based on said target end-to-end delay D.

**11.** Method according to any of claims 8 to 10, further comprising:

- adjusting said maximum bitrate and/or to adjusting said minimum bitrate based on a ratio of media Quality of Experience contribution MOSV and delay Quality of Experience contribution MOSD.

**12.** Method according to one of the preceding claims, further comprising:

- determining said target end-to-end delay D at most once within a predetermined time interval.

**13.** Method according to one of the preceding claims, further comprising:

- adding hysteresis when determining said target end-to-end delay D.

**14.** Method according to one of the preceding claims, further comprising:

- determining said target end-to-end delay D at a rate based on a Quality of Experience MOS parameter.

**15.** A computer program product comprising computer-executable instructions for causing an apparatus (100) to perform at least the following:

- playing segments of a media stream with an adjustable target end-to-end delay D;
- temporarily storing said segments in a buffer (102) before playback;
- estimating network goodput G corresponding to usage of network resources to transport said segments;
- determining a selected segment quality out of a plurality of available segment qualities corresponding to respective encoding rates for said segments, based on said goodput G, a buffer fill level L of said buffer (102), and information indicative for said available segment qualities;
- loading said segments of said media stream with said selected segment quality and storing said segments in said buffer (102);
- determining said target end-to-end delay D for being applied to said segments;
- controlling the playback speed by applying said target end-to-end delay D when playing said segments;
- determining a variable maximum bitrate; and
- limiting said selected segment quality based on said variable maximum bitrate.

Fig. 1

EP 3 664 456 A1

Fig. 2

Fig. 3

Fig. 4

Fig. 5

Europäisches
Patentamt

European
Patent Office

Office européen
des brevets

# EUROPEAN SEARCH REPORT

Application Number

EP 18 38 2887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/227080 A1 (GAO QIANG [US] ET AL) 29 August 2013 (2013-08-29)<br><br>* figures 1, 2, 5, 18-21, 25 *<br>* paragraphs [0002], [0011], [0012], [0055] *<br>* paragraph [0068] - paragraph [0087] *<br>* paragraph [0099] - paragraph [0123] *<br>* paragraph [0159] - paragraph [0188] *<br>* paragraphs [0230], [0231] *<br>* paragraph [0346] *<br>* paragraph [0356] - paragraph [0361] *<br>----- | 1-3,5,6, 8-10,12, 13,15 | INV.<br>H04N21/2343<br>H04N21/845<br>H04N21/44<br>H04N21/442<br>H04N21/4402 |
| Y | STEINBACH E ET AL: "Adaptive playout for low latency video streaming", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, NEW YORK, NY, vol. 1, 7 October 2001 (2001-10-07), pages 962-965, XP010565021, DOI: 10.1109/ICIP.2001.959207 ISBN: 978-0-7803-6725-8<br>* sections 1-5 *<br>* section 8 *<br>----- | 1-3,5,6, 8-10,12, 13,15 | |
| Y<br>A | US 2018/041788 A1 (WANG ZHOU [CA] ET AL) 8 February 2018 (2018-02-08)<br>* figures 1, 3, 6-14 *<br>* paragraphs [0035], [0036] *<br>* paragraph [0043] - paragraph [0048] *<br>----- | 1,5,8,15<br><br>4,7,11, 14 | |

TECHNICAL FIELDS
SEARCHED    (IPC)

H04N

-/--

The present search report has been drawn up for all claims

| Place of search | Date of completion of the search | Examiner |
|---|---|---|
| Munich | 1 February 2019 | Döttling, Martin |

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/215085 A1 (LI ZHI [US] ET AL) 31 July 2014 (2014-07-31) * figures 1, 4 * * paragraph [0013] - paragraph [0015] * * paragraph [0025] - paragraph [0031] * * paragraph [0046] - paragraph [0050] * ----- | 1,8,15 | |

TECHNICAL FIELDS
SEARCHED      (IPC)

The present search report has been drawn up for all claims

| Place of search | Date of completion of the search | Examiner |
|---|---|---|
| Munich | 1 February 2019 | Döttling, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 38 2887

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2019

| Patent document cited in search report | | Publication date | Patent family member(s) | | Publication date |
|---|---|---|---|---|---|
| US 2013227080 | A1 | 29-08-2013 | CN | 104205769 A | 10-12-2014 |
| | | | CN | 104205770 A | 10-12-2014 |
| | | | CN | 104205772 A | 10-12-2014 |
| | | | EP | 2820819 A1 | 07-01-2015 |
| | | | EP | 2820820 A1 | 07-01-2015 |
| | | | EP | 2820823 A1 | 07-01-2015 |
| | | | JP | 6054427 B2 | 27-12-2016 |
| | | | JP | 6271445 B2 | 31-01-2018 |
| | | | JP | 2015511783 A | 20-04-2015 |
| | | | JP | 2015511784 A | 20-04-2015 |
| | | | JP | 2015513840 A | 14-05-2015 |
| | | | KR | 20140130210 A | 07-11-2014 |
| | | | KR | 20140130211 A | 07-11-2014 |
| | | | KR | 20140138784 A | 04-12-2014 |
| | | | US | 2013227080 A1 | 29-08-2013 |
| | | | US | 2013227081 A1 | 29-08-2013 |
| | | | US | 2013227122 A1 | 29-08-2013 |
| | | | WO | 2013130474 A1 | 06-09-2013 |
| | | | WO | 2013130475 A1 | 06-09-2013 |
| | | | WO | 2013130477 A1 | 06-09-2013 |
| US 2018041788 | A1 | 08-02-2018 | CA | 2975904 A1 | 11-08-2016 |
| | | | CN | 107211193 A | 26-09-2017 |
| | | | EP | 3254470 A1 | 13-12-2017 |
| | | | JP | 2018520560 A | 26-07-2018 |
| | | | US | 2018041788 A1 | 08-02-2018 |
| | | | WO | 2016123721 A1 | 11-08-2016 |
| US 2014215085 | A1 | 31-07-2014 | US | 2014215085 A1 | 31-07-2014 |
| | | | WO | 2014116449 A1 | 31-07-2014 |

EPO FORM P0459

For more details about this annex : see Official Journal of the European Patent Office, No. 12/82